# EUROPÄISCHE PATENTSCHRIFT

(11) **EP 0 561 046 B1**
(45) Veröffentlichungstag und Bekanntmachung des Hinweises auf die Patenterteilung: **03.07.1996**
(21) Anmeldenummer: 92119397.5
(22) Anmeldetag: 13.11.1992
(51) Int. Cl.: C23C 4/02, B64C 11/20, B64C 27/64, F01D 5/28, C23C 28/00

(54) **Erosionsschutz für einen einer Luftströmung ausgesetzten Körper**
Erosion shield for an aerofoil surface
Protection anti-érosion pour surfaces à profil d'aile

(30) Priorität: 19.03.1992 DE 4208842
(43) Veröffentlichungstag der Anmeldung: 22.09.1993
(73) Patentinhaber: EUROCOPTER DEUTSCHLAND GmbH, D-85521 Ottobrunn (DE)
(72) Erfinder: Hammer, Joachim, Dr., W-8501 Rückersdorf (DE); Schindler, Rudolf, W-8014 Neubiberg (DE)

(56) Entgegenhaltungen:
- EP-A- 0 383 466
- DE-A- 3 415 465
- DE-A- 3 527 912
- DE-C- 3 825 200
- FR-A- 2 054 071
- FR-A- 2 105 163
- PATENT ABSTRACTS OF JAPAN vol. 015, no. 068 18. Februar 1991 & JP-A-2294484
- PATENT ABSTRACTS OF JAPAN vol. 011, no. 361 25. November 1987 & JP-A-62133060
- Römpp Chemie Lexikon, 9. Auflage, 1991, G. Thieme Verlag Stuttgart; Seiten 2985/2986, Stichwort "Nichteisenmetalle"

## Beschreibung

Die Erfindung betrifft einen bei seiner Verwendung einer Luftströmung ausgesetzten, erosionsgeschützten Körper gemäß dem Oberbegriff des Patentanspruchs.

Bei einem derartigen Körper in Form einer Holzluftschraube hat sich gemäß der DE-PS 674 727 der gewählte Erosionsschutz-Überzug mangels ausreichender Elastizität und Festigkeit der gewählten Metalle nicht durchsetzen können. Für Hubschrauberrotorblätter aus faserverstärkten Kunststoffmaterialien werden gemäß der DE-OS 37 12 705 Erosionsschilder (auch sog. Erosionsschutzschalen) aus korrosionsbeständigem Stahl oder Titan vorgesehen, welche Metalle jedoch einer Warmverformung des einzelnen Erosionsschildes bedürfen, um diesen mit ausreichender Genauigkeit der zu schützenden Blattoberfläche anzupassen. Da diese Metalle außerdem einen relativ hohen Elastizitätsmodul im Vergleich zum Verbundwerkstoff des Hubschrauberrotorblattes haben, sind unter Belastung desselben hohe Spannungen in der (Klebstoff-)Verbindung zwischen dem Erosionsschild und der Blattoberfläche nicht auszuschließen. Das gilt auch für die in dieser DE-OS für Erosionsschilder vorgeschlagene kaltverformbare Titanlegierung, in welcher der Titananteil nur 76% betragen soll. Das bisher häufigste Ausfallkriterium für Rotorblätter, nämlich Ablösungen der Erosionsschilder, läßt sich auch damit noch nicht zufriedenstellend reduzieren.

Der Erfindung liegt daher bei einem Körper der eingangs genannten Art die Aufgabe zugrunde, ausgehend von der Grundschicht aus einem Werkstoff mit annährend gleichem Elastizitätsmodul wie der Werkstoff an der zu schützenden Körperoberfläche einen Erosionsschutz zu schaffen, welcher zugleich eine dem Erosionsschutz aus Stahl oder Titan zumindest entsprechende Erosionsbeständigkeit gegen Regen, Sandpartikel u. dgl. gewährleistet.

Diese Aufgabe ist mit den kennzeichnenden Merkmalen des Patentanspruchs gelöst. Damit wird zum einen erreicht, daß zwischen der geschützten Oberfläche und Grundschicht "Blech" des Überzuges praktisch Dehnungskompatibilität besteht und folglich eine Überbeanspruchung ihrer Klebverbindung unter Belastung des geschützten Körpers (z.B. Rotorblatt) ausgeschlossen ist. Zum anderen gewährleisten die harten Partikel (sog. Dispersoide) in der Beschichtung des Bleches eine hohe Erosionsbeständigkeit auch bei gemischter Beanspruchung durch Regen und Sandpartikel. Hinzu kommt, daß selbst bei einer Schädigung der Beschichtung das Blech noch einen Schutz der zugehörigen Oberfläche gewährleistet und damit dann der erfindungsgemäße Erosionsschutz, z.B. im Falle des Rotorblattes, sog. Notlaufeigenschaften hat. Eine solche Schädigung läßt sich zudem wegen des Farbunterschiedes der Beschichtung gegenüber dem Blech leicht erkennen und erforderlichenfalls sogar einfach "vor Ort" beheben, beispielsweise durch Hochgeschwindigkeitsflammspritzen des zweiphasigen Werkstoffs auf das Blech. Damit werden nicht nur Reparatur- bzw. Werkstoffkosten vermindert, sondern vor allem die Reparaturzeit verkürzt, was im Beispielsfall des Rotorblattes eines Hubschraubers o. dgl. verlängerte Betriebsintervalle und somit verminderte Betriebskosten zur Folge hat.

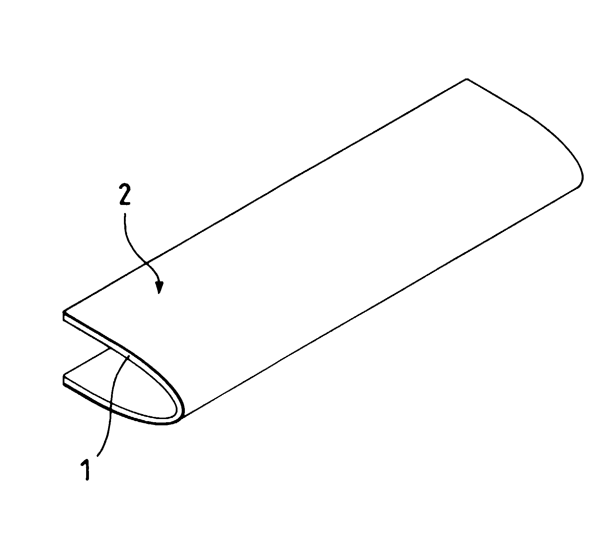

Nachfolgend wird die Erfindung anhand eines Ausführungsbeispieles weiter erläutert. Hierbei zeigt die Zeichnung in einer perspektivischen Ansicht eine auf die Staukante eines nicht dargestellten Rotorblattes aus faserverstärktem Kunststoff zu klebende sog. Erosionsschutzschale, welche aus einem dem Blattprofil an der Staukante entsprechend geformten Aluminiumblech 1 und einer Außenschicht 2 eines zweiphasigen metallischen Werkstoffes besteht. Dieser durch Hochgeschwindigkeitsbeschichten, vorzugsweise Hochgeschwindigkeitsflamm- oder auch Elektronenstrahlspritzen bei einer Blechdicke von 1 mm etwa in einer Dicke von 200 bis 400 µm aufgebrachte Werkstoff erfüllt im wesentlichen die Funktion des Erosionsschutzes, wozu in einer duktilen, mischkristallgehärteten Matrix aus einem Nichteisen metall Partikel aus Metalloxid- oder/und Metallkarbid- oder/und Metallnitridverbindungen feinverteilt eingebettet sind. Als Nichteisen metall der Matrix kommen beispielsweise Nickel, Chrom, Kobalt, Wolfram oder deren Verbindungen untereinander in Betracht. Als in der Matrix feinverteilte Partikel werden die Verbindungen Aluminiumoxid, Chromoxid, Zirkoniumoxid, Titankarbid, Wolframkarbid und Titannitrid bevorzugt.

Das Hochgeschwindigkeitsflammspritzen ermöglicht die vorerwähnte Ausbesserung von Schäden einfach "vor Ort".

Wie bereits erwähnt, kommt dem Aluminiumblech 1 im wesentlichen die Funktion einer mit der zugeordneten Oberfläche (durch einen Klebstoff z.B. auf Kunstharzbasis) zu verbindenden Grundschicht zu, welche infolge eines annähernd gleichen Elastizitätsmoduls wie der faserverstärkte Kunststoff des (nicht dargestellten) Rotorblattes mit dessen Oberfläche dehnungskompatibel ist. Demnach ist anstelle des Bleches 1 aus Aluminium oder einer seiner Legierungen auch ein solches aus einem anderen Leichtmetall, z.B. Magnesium, verwendbar.

## Patentansprüche

1. Erosionsgeschützter bei seiner Verwendung einer Luftströmung ausgesetzter Körper im wesentlichen aus einem Faserstoff oder faserverstärkten Kunststoff, insbesondere Rotorblatt, welcher Körper im jeweils zu schützenden Bereich seiner Oberfläche mit einem mehrschichtigen, metallischen Überzug bedeckt ist, der aus einer Grundschicht aus Leichtmetall, bevorzugt Aluminium besteht, wobei das Leichtmetall einen annähernd gleichen Elastizitätsmodul wie das Material an der Oberfläche des Körpers besitzt, dadurch gekennzeichnet, daß die Grundschicht in Form eines Bleches (1) auf die Körperoberfläche geklebt und mit mindestens einer Schicht eines zweiphasigen Werkstoffs (Außenschicht 2) beschichtet ist, bei dem in einer duktilen, mischkristallgehärteten Matrix aus einem Nichteisenmetall feinverteilt Partikel aus Metalloxid- oder/und Metallkarbid- oder/und Metallnitridverbindungen eingebettet sind.

## Claims

1. A body which is protected from erosion during its use when subjected to an air flow, substantially comprising a fibrous material or fibre-reinforced plastic, particularly a rotor blade, which body is covered, in each region of its surface which is to be protected, by a multilayer, metallic coating which consists of a base layer of light metal, preferably aluminium, wherein the light metal has a modulus of elasticity which is approximately identical to that of the material on the surface of the body, **characterised in that** the base layer in the form of a metal sheet (1) is adhesively bonded to the surface of the body and is coated with at least one layer of a two-phase material (outer layer 2) in which finely divided particles of metal oxide or/and metal carbide or/and metal nitride compounds are embedded in a ductile, solid solution-hardened matrix of a nonferrous metal.

## Revendications

1. Elément protégé contre l'érosion, exposé à un écoulement d'air lors de son utilisation, constitué essentiellement d'une matière fibreuse ou d'un matériau synthétique renforcé par fibres, notamment pale de rotor, lequel élément, dans la région à protéger de sa surface, est recouvert d'un revêtement multicouches en métal léger, de préférence en aluminium, le métal léger ayant un module d'élasticité sensiblement identique à celui du matériau à la surface de l'élément, caractérisé par le fait que la couche de base qui se présente sous la forme d'une tôle (1) est collée sur la surface de l'élément et est recouverte d'au moins une couche d'un matériau diphasique (couche extérieure 2), dans lequel des particules finement réparties de composés de type oxyde métallique et/ou carbure métallique et/ou nitrure métallique sont noyées dans une matrice ductile, durcie en une solution solide, composée d'un métal non ferreux.
